# EUROPEAN PATENT APPLICATION

(11) **EP 4 617 398 A1**
(43) Date of publication of application: **17.09.2025**
(21) Application number: 23918515.0
(22) Date of filing: 31.10.2023
(51) Int. Cl.: C23C 2/06, C22C 18/00, C22C 18/04, C23C 2/40

(54) **ZN-AL-MG PLATED STEEL SHEET**

(30) Priority: 23.01.2023 JP 2023008364
(71) Applicant: JFE Steel Corporation, Tokyo 100-0011 (JP)
(72) Inventor: MAKIMIZU Yoichi, Tokyo 100-0011 (JP); TANAKA Minoru, Tokyo 100-0011 (JP)
(74) Representative: Hoffmann Eitle
(86) International application number: PCT/JP2023/039330
(87) International publication number: WO 2024/157560

(57) **Abstract**

Provided is a Zn-Al-Mg coated steel sheet that has excellent sliding properties and spot weldability while also securing excellent corrosion resistance. The Zn-Al-Mg coated steel sheet includes a steel sheet, a coated layer formed on at least one side of the steel sheet, and an oxide layer formed on a surface of the coated layer. The coated layer has a chemical composition containing, in mass%, Al: 0.5 % or more and 10.0 % or less, and Mg: 0.5 % or more and 10.0 % or less, with the balance being Zn and inevitable impurity. The surface of the coated layer has a Zn single-phase microstructure and a eutectic microstructure. The eutectic microstructure contains a Zn-Mg intermetallic compound phase and also one or more phases selected from a Zn phase, an Al phase, and an Al-Mg intermetallic compound phase. An area fraction A of the eutectic microstructure on the surface of the coated layer is less than 60 %. An average thickness B of the oxide layer on the surface of the coated layer is 10 nm or more and 50 nm or less.

## Description

### TECHNICAL FIELD

The present disclosure relates to Zn-Al-Mg coated steel sheets.

### BACKGROUND

Conventionally, hot-dip galvanized steel sheets have excellent sacrificial protection and good corrosion resistance, and therefore have been utilized as anti-corrosion steel sheets for automobiles. Further, hot-dip galvanized steel sheets include a pure zinc coated layer that has high ductility, and therefore demonstrate remarkably superior performance in terms of powdering during press working.

In recent years, steel sheets are increasingly being joined by adhesive bonding instead of conventional spot welding and other methods in automobile production processes. Under these circumstances, hot-dip galvanized steel sheets have advantages over hot-dip galvannealed steel sheets, such as higher shear strength at the coated layer sheet interface, which allows the use of stronger adhesives. Further, when hot-dip galvanized steel sheets are used as outer sheets, chipping performance is also better than that of hot-dip galvannealed steel sheets. Because of the excellent performance of hot-dip galvanized steel sheets, use as steel sheets for automobiles is increasing year by year.

On the other hand, hot-dip galvanized steel sheets have the disadvantage that weldability, in particular in continuous spot welding, is inferior to that of hot-dip galvannealed steel sheets and the like. Weldability depends on coating weight and is improved by reducing coating weight, but on the other hand, decreased coating weight invites degradation of corrosion resistance. Further, hot-dip galvanized steel sheets have the disadvantage that press formability is inferior to that of hot-dip galvannealed steel sheets and the like, because the frictional coefficient between the coated layer and the press mold is higher due to the relatively soft Zn phase.

To overcome such issues, hot-dip coated steel sheets have been proposed, mainly to improve corrosion resistance. For example, Patent Literature (PTL) 1 and PTL 2 describe Zn-Al-Mg coated steel sheets that have excellent corrosion resistance and contain Al: 2 mass% to 19 mass%, Mg: 1 mass% to 10 mass%, and a trace amount of Si. Further, PTL 3 describes a "zinc alloy plated steel sheet having excellent phosphatability and spot weldability" containing Al and Mg. Further, PTL 4 describes a "Mg, Al-containing hot-dip Zn-coated steel sheet that has excellent slidability".

### CITATION LIST

### Patent Literature

PTL 1: JP 2000-104154 A
PTL 2: JP 2003-268519 A
PTL 3: JP 2018-507321 A
PTL 4: JP 2010-106293 A

### SUMMARY

### (Technical Problem)

However, the conventional technologies mentioned above have the following problems. In PTL 1 and PTL 2, spot weldability for automotive body applications and sliding properties that affect press formability have not been sufficiently considered. Further, although spot weldability is considered in PTL 3, press formability is not considered. On the other hand, in PTL 4, sliding properties are studied but spot weldability is not considered. Steel sheets for automobiles are required to satisfy multiple required properties at the same time, but as described above, no study has been made on achieving all of corrosion resistance, sliding properties that affect press formability, and spot weldability.

In view of the above issues, it would be helpful to provide a Zn-Al-Mg coated steel sheet that has excellent sliding properties and spot weldability while also securing excellent corrosion resistance.

### (Solution to Problem)

In order to solve the aforementioned problems, the inventors conducted extensive studies and made the following discoveries. When only specifying the amounts of Al and Mg in the coated layer in order to secure high corrosion resistance, achieving good sliding properties and spot weldability is difficult. Further, the thicker the oxide layer formed on the surface of the coated layer, the better the sliding properties, but spot weldability degrades. For this reason, it has conventionally been difficult to achieve both good sliding properties and spot weldability. The inventors have discovered that by adopting a defined composition of the coated layer and optimizing the cooling conditions after hot-dip coating, then, in the coated layer surface, it is possible to form an oxide layer predominantly on eutectic microstructure, while almost no oxide layer is formed on Zn single-phase microstructure. In this case, excellent spot weldability can be secured by suppressing the area fraction of the eutectic microstructure on the coated layer surface. Moreover, a thick oxide layer is formed on the eutectic microstructure, and therefore average thickness of the oxide layer can be maintained at least at a defined level even when the area fraction of the eutectic microstructure is suppressed. Therefore, excellent sliding properties are also obtainable.

Primary features of the present disclosure are as follows.
[1] A Zn-Al-Mg coated steel sheet comprising: a steel sheet; a coated layer formed on at least one side of the steel sheet; and an oxide layer formed on a surface of the coated layer, wherein
   the coated layer has a chemical composition containing (consisting of), in mass%, Al: 0.5 % or more and 10.0 % or less, and Mg: 0.5 % or more and 10.0 % or less, with the balance being Zn and inevitable impurity,
   the surface of the coated layer has a Zn single-phase microstructure and a eutectic microstructure,
   the eutectic microstructure contains a Zn-Mg intermetallic compound phase and also one or more phases selected from a Zn phase, an Al phase, and an Al-Mg intermetallic compound phase,
   an area fraction A of the eutectic microstructure on the surface of the coated layer is less than 60 %, and
   an average thickness B of the oxide layer on the surface of the coated layer is 10 nm or more and 50 nm or less.
[2] The Zn-Al-Mg coated steel sheet according to [1], above, wherein the area fraction A, in %, of the eutectic microstructure and the average thickness B, in nm, of the oxide layer satisfy B/A ≥ 0.40.
[3] The Zn-Al-Mg coated steel sheet according to [1] or [2], above, wherein the chemical composition of the coated layer further contains one or more selected from the group consisting of Si, Fe, Pb, Ti, Ni, Cu, Co, Mn, Cr, Mo, V, Sr, B, Bi, Cd, Sn, and REM, in a total amount of 1 mass% or less.

### (Advantageous Effect)

The Zn-Al-Mg coated steel sheet has excellent sliding properties and spot weldability while also securing excellent corrosion resistance.

### BRIEF DESCRIPTION OF THE DRAWINGS

In the accompanying drawings:
FIG. 1 is an SEM image of a coated layer surface of Example No. 1;
FIG. 2 is a schematic diagram of a corrosion test piece;
FIG. 3 is a diagram illustrating cycle conditions for a corrosion test;
FIG. 4 is a schematic front view illustrating a frictional coefficient measuring apparatus; and
FIG. 5 is a schematic diagram illustrating shape and dimensions of a bead.

### DETAILED DESCRIPTION

The following is a description of an embodiment of the Zn-Al-Mg coated steel sheet according to the present disclosure. The embodiment described below is an example embodiment of the present disclosure, and does not limit configuration to the specific example described.

The Zn-Al-Mg coated steel sheet according to the present disclosure includes a steel sheet, a coated layer formed on at least one side of the steel sheet, and an oxide layer formed on a surface of the coated layer. There are no particular restrictions on the type of steel sheet, which may be a typical hot-rolled steel sheet or cold-rolled steel sheet, such as ultra-low carbon mild steel, for example. The coated layer is a zinc alloy coated layer and may be formed on one or both sides of the steel sheet.

When the Al concentration in the coated layer is too low, corrosion resistance and coating adhesion cannot be ensured, and a large amount of dross is generated due to oxidation of Mg in the coating bath. The Al concentration in the coated layer is therefore 0.5 mass% or more. The Al concentration is preferably 1.0 mass% or more. On the other hand, when the Al concentration is excessive, an Al phase or Al-Zn phase may precipitate as the primary crystal. These phases preferentially corrode in the coated layer, but are not as effective as Zn-Mg intermetallic compounds in stabilizing corrosion products and improving corrosion resistance, but rather decrease corrosion resistance. The Al concentration in the coated layer is therefore 10.0 mass% or less. When the Al concentration is 10.0 mass% or less, no primary crystal Al phase or Al-rich Al-Zn phase is precipitated, and a coating microstructure that includes Zn phase and eutectic microstructure is obtainable.

When the Mg concentration in the coated layer is too low, corrosion resistance cannot be ensured. The Mg concentration in the coated layer is therefore 0.5 mass% or more. The Mg concentration is preferably 1.0 mass% or more. When the Mg concentration is 1.0 mass% or more, the Zn-Mg intermetallic compound is stably dispersed in the eutectic microstructure in the coated layer and corrosion resistance is further improved with increasing Mg concentration, which is preferable. On the other hand, when the Mg concentration in the coated layer is excessive, spot weldability is instead degraded. Further, workability, particularly the degree of cracking during bending, cannot be maintained at the same level as that of a conventional hot-dip galvanized steel sheet. Accordingly, the Mg concentration in the coated layer is 10.0 mass% or less. The Mg concentration is preferably 7.0 mass% or less. When the Mg concentration is 7.0 mass% or less, coating adhesion is not decreased, which is preferable.

Further, the chemical composition of the coated layer can optionally contain one or more selected from the group consisting of Si, Fe, Pb, Ti, Ni, Cu, Co, Mn, Cr, Mo, V, Sr, B, Bi, Cd, Sn, and REM (rare earth metals), in a total amount of 1 mass% or less. When the total content of these elements exceeds 1 mass%, operational problems become more likely due to instability of the bath composition or quality problems that impair surface appearance. Therefore, when one or more selected from the group consisting of Si, Fe, Pb, Ti, Ni, Cu, Co, Mn, Cr, Mo, V, Sr, B, Bi, Cd, Sn, and REM are included, the total content of these elements is 1 mass% or less. These elements are optional elements, and therefore a lower limit of content of these elements is not particularly limited and may be 0 mass%.

The balance of the chemical composition of the coated layer consists of Zn and inevitable impurity.

The following describes the microstructure of the Zn-Al-Mg coated layer. The coated layer according to the present disclosure has a Zn single-phase microstructure and a eutectic microstructure. The Zn single-phase microstructure is required to exhibit the sacrificial protection effect of Zn in the coated layer, which provides good corrosion resistance.

The eutectic microstructure in the coated layer according to the present disclosure contains a Zn-Mg intermetallic compound phase and also one or more phases selected from a Zn phase, an Al phase, and an Al-Mg intermetallic compound phase. Here, Zn-Mg intermetallic compounds are intermetallic compounds consisting mainly of Zn and Mg, such as MgZn₂, MgZn₁₁, Mg₂Zn₃, and MgZn. Further, Al-Mg intermetallic compounds are intermetallic compounds consisting mainly of Al and Mg, such as Mg₂Al₃, MgAl, and Mg₁₇Al₁₂. This eutectic microstructure preferentially initiates corrosion during a corrosion process of the coated layer. The Mg eluted at this time stabilizes the corrosion products, mainly oxides or hydroxides in the coated layer, and inhibits subsequent corrosion of the coated layer overall.

While the eutectic microstructure exhibits good corrosion resistance, spot weldability degrades as the area fraction of the eutectic microstructure on the surface of the coated layer increases. The eutectic microstructure contains easily oxidized components such as Mg and Al, and therefore the oxide layer tends to form more thickly than in the Zn single-phase microstructure. As the area fraction of the eutectic microstructure on the surface of the coated layer increases, the area fraction of the oxide layer covering the coated layer also increases, resulting in higher electrical resistance at the interface between electrode and steel sheet during spot welding, and spot weldability decreases. The area fraction of the eutectic microstructure on the surface of the coated layer according to the present embodiment is therefore less than 60 %. The area fraction of the eutectic microstructure is preferably 50 % or less. Further, when the area fraction of the eutectic microstructure on the surface of the coated layer is too small, an average thickness of the oxide layer cannot be 10 nm or more, and sliding properties become insufficient. The area fraction of the eutectic microstructure on the surface of the coated layer is therefore preferably 5 % or more. The area fraction is more preferably 10 % or more.

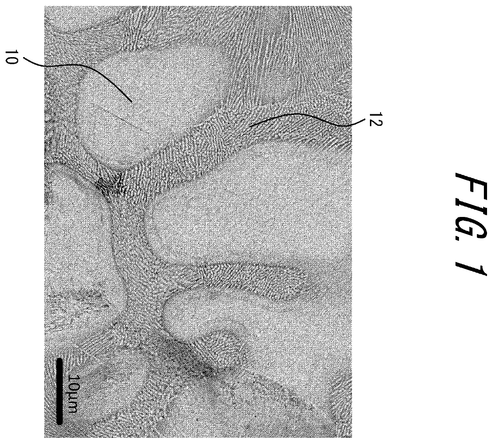

Single-phase microstructure and eutectic microstructure on the surface of the coated layer can be identified, for example, by using a scanning electron microscope (SEM), an accompanying energy dispersive X-ray analyzer (EDX), and an electron probe microanalyzer (EPMA). For example, in the SEM image in FIG. 1, a region that has a smooth, white appearance is Zn single-phase microstructure, in which only Zn can be detected by EDX or EPMA. In the SEM image in FIG. 1, a region that has lamellar structure is eutectic microstructure, and a white portion within this region is a Zn phase, while a gray portion is a Zn-Mg intermetallic compound phase, an Al phase, or an Al-Mg intermetallic compound phase. In regions that have the lamellar structure, Zn and Mg are detected by EDX or EPMA, and when eutectic microstructure contains one or both of an Al phase and an Al-Mg intermetallic compound phase, then Al is also detected.

The "area fraction of eutectic microstructure on the surface of the coated layer" is identified by obtaining SEM images or EDX or EPMA mapping images of the coated layer surface of a Zn-Al-Mg coated steel sheet in three different arbitrary fields of view. The eutectic microstructure can be identified by binarization of the SEM images or mapping images, determining the area fraction of eutectic microstructure in each field of view, and calculating the arithmetic mean of the area fractions of the three fields of view. The magnification of the SEM images or mapping images may be selected according to the size of the surface microstructure. According to the present disclosure, the magnification may be from 500× to 2000×. Further, an accelerating voltage of 5 kV to 20 kV that does not provide information on extremely surface regions or deep regions, is suitable.

An average thickness of the oxide layer on the surface of the coated layer is 10 nm or more. Formation of a thick oxide layer on the coated layer surface helps prevent direct contact of the coated layer with the press die, thereby suppressing adhesion of the coated layer to the press die. Accordingly, the frictional coefficient can be stabilized to a low value, good sliding characteristics are obtainable, and press formability is improved. The average thickness of the oxide layer being 20 nm or more is more effective. This is to help prevent degradation of sliding properties in press forming where the sliding distance is long, because the oxide layer on the coated layer surface easily remains even when the oxide layer is subjected to wear. Further, the average thickness of the oxide layer is 50 nm or less. When the average thickness of the oxide layer exceeds 50 nm, electrical resistance at the interface between electrode and steel sheet increases during spot welding, and spot weldability decreases. The average thickness of the oxide layer is preferably 45 nm or less. The average thickness is more preferably 40 nm or less. The average thickness is even more preferably 35 nm or less.

The "average thickness of the oxide layer on the surface of the coated layer" is determined using an X-ray fluorescence spectrometer. During the measurement, the tube voltage is 30 kV, the current value is 100 mA, and the spectral crystal is set to TAP to detect O-Kα rays. When measuring O-Kα rays, intensity at a background position is also measured in addition to a peak position, and the net intensity of O-Kα rays is calculated. Further, each integration time is 20 s or longer. In addition to the test material (Zn-Al-Mg coated steel sheet to be measured), the O-Kα ray intensities of silicon wafers that have 96 nm, 54 nm, or 24 nm thick silicon oxide coatings were also measured under the same conditions, and a calibration curve of oxide film thickness and O-Kα ray intensity is prepared. The oxide layer thickness of the test material is calculated as the thickness of the oxide layer in terms of the silicon oxide coating values, and this is used as the "average thickness of the oxide layer".

As mentioned above, when the oxide layer is formed mainly on the eutectic microstructure, increasing the area fraction of the eutectic microstructure increases the average thickness of the oxide layer and improves sliding properties, but on the other hand also decreases spot weldability. Accordingly, the inventors have conducted extensive studies on achieving both good sliding properties and spot weldability, and discovered that the average thickness of the oxide layer can be increased by forming a thicker oxide layer on the eutectic microstructure, while keeping the area fraction of the eutectic microstructure below 60 %, thereby achieving a high level for both sliding properties and spot weldability. Specifically, the area fraction A (%) of the eutectic microstructure and the average thickness B (nm) of the oxide layer are preferably such that B/A ≥ 0.40. The B/A value represents the local thickness of the oxide layer that forms on the eutectic microstructure, and the larger this value, the more consistently good spot weldability and sliding properties can be obtained. The higher the B/A value, the better, and therefore an upper limit is not particularly limited. According to the present embodiment, B/A is generally 1.10 or less.

A method to achieve the area fraction of eutectic microstructure on the coated layer surface of less than 60 % is not particularly restricted. For example, a holding process of 10 s or longer in a temperature range from 400 °C to 380 °C in a cooling process after a hot-dip coating treatment promotes the formation and growth of a Zn layer as the primary crystal, and the area fraction of eutectic microstructure that subsequently starts solidification is decreased. However, as conventionally, when Zn phase formed as the primary crystal is held in this temperature range in a normal air atmosphere, a thick oxide layer also forms on the Zn phase, and particularly when the average thickness of the oxide layer exceeds 50 nm, this leads to a decrease in spot weldability. Therefore, in order to make the average thickness of the oxide layer be 50 nm or less, the atmosphere of the holding process is less oxidizing than a normal air atmosphere. The atmosphere is preferably a non-oxidizing atmosphere. The atmosphere is more preferably a reducing atmosphere. Examples of atmosphere that is less oxidizing than an air atmosphere include an atmosphere that has a lower concentration of O₂ than air. Examples of non-oxidizing atmosphere include an inert gas atmosphere, for example a N₂ atmosphere. Examples of reducing atmosphere include an N₂ atmosphere containing H₂, as in the annealing process prior to the hot-dip coating treatment.

Further, a method to achieve the average thickness of the oxide layer of 10 nm or more is also not particularly limited. By carrying out the holding process in the temperature range from 400 °C to 380 °C after the hot-dip coating treatment and then carrying out a holding process in a temperature range from 160 °C to 140 °C for 20 s or longer, the oxide layer on the eutectic microstructure can be made thicker. This is because in this temperature range, oxide layer formation occurs mainly on the eutectic microstructure rather than on the Zn phase. The atmosphere is an oxidizing atmosphere, which allows the formation of a thicker oxide layer without causing spot weldability to decrease. The oxidizing atmosphere may be air. Oxygen, water vapor, or the like is preferably introduced into the atmosphere of the holding process at 160 °C to 140 °C to make the oxidizing atmosphere more oxidizing than an air atmosphere.

The coating weight per side of the coated layer is not particularly limited, and may be in a range from 10 g/m² to 300 g/m². The "coating weight per side of the coated layer" is determined from the difference in weight before and after dissolving and removing the coated layer using hydrochloric acid in accordance with JIS H 0401:2021.

### EXAMPLES

### <Test material preparation>

Ultra-low carbon mild steel as base material was coated to produce Zn-Al-Mg coated steel sheets that have coated layers with different chemical compositions. In each case, the coating weight was 50 ± 5 g/m². In each case, the coated layer of the coated steel sheet was dissolved in hydrochloric acid, and the chemical composition of the coated layer was determined by ICP analysis of the coating solution. Table 1 lists the chemical composition of the coated layer for each case. In the present examples, test material that had different average thicknesses for the oxide layer and area fractions of the eutectic microstructure at the coated layer surface were prepared by changing the cooling conditions after coating. Table 1 illustrates the cooling conditions for each case. The hold times listed in Table 1 indicate the time held in the temperature range, and the hold times were adjusted in each temperature range by intentionally holding the steel sheets in each temperature range. However, in the temperature range from 400 °C to 380 °C, No. 2 and No. 9 were allowed to naturally cool without holding temperature, and therefore passed through the temperature range in about 1 s. In the temperature from 160 °C to 140 °C, No. 7 and No. 9 were allowed to naturally cool without holding temperature, and therefore passed through the temperature range in about 3 s.

For each example of Zn-Al-Mg coated steel sheet, the surface microstructure of the coated layer was observed as follows. The coated layer surface was observed by SEM, and Zn, Al, and Mg were determined by elemental mapping using EDX. FIG. 1 illustrates an SEM image of No. 1, representing an Example according to the present disclosure. In the SEM image of FIG. 1, a region that has a smooth, white appearance is Zn single-phase microstructure 10, in which only Zn was detected by EDX. In the SEM image of FIG. 1, a region that has a lamellar structure is eutectic microstructure 12, in which both Zn and Mg were detected by EDX. In Table 1, an entry of "O" for Zn phase single-phase microstructure and eutectic microstructure means that the microstructure was confirmed. The eutectic microstructure contained a Zn-Mg intermetallic compound phase and also one or more phases selected from a Zn phase, an Al phase, and an Al-Mg intermetallic compound phase.

Further, "Eutectic microstructure area fraction A" in the coated layer surface was determined by the previously described method and is listed in Table 1. The SEM observation magnification was set at 2000× and the accelerating voltage was 15 kV.

Further, "Oxide layer average thickness B" in the coated layer surface was determined by the previously described method and is listed in Table 1.

The corrosion resistance, sliding properties, and spot weldability of the test material obtained as above (Zn-Al-Mg coated steel sheet) were evaluated as follows. A galvannealed steel sheet (No. 41) and hot-dip galvanized steel sheets (No. 42, 43) that had the specifications listed in Table 2 were prepared as Comparative Examples, and these were also subjected to evaluation.

### <Corrosion resistance>

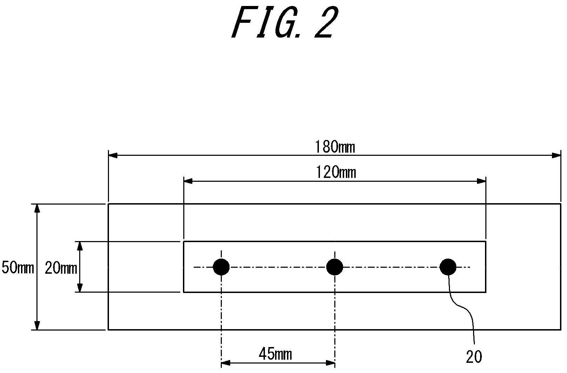

Corrosion tests were conducted to evaluate perforation corrosion resistance at a steel sheet overlap area, assuming use as steel sheets for automobiles. A Society of Automotive Engineers (SAE) corrosion test standard, SAE J2334, was used for the corrosion test conditions. FIG. 2 illustrates a schematic of a corrosion test piece. In each case, two coated steel sheets that had the dimensions illustrated in FIG. 2 were prepared and spot-welded in three locations so that spot welded portions 20 were at the positions illustrated in FIG. 2, thereby preparing a test piece simulating an overlap between steel sheets in an automobile.

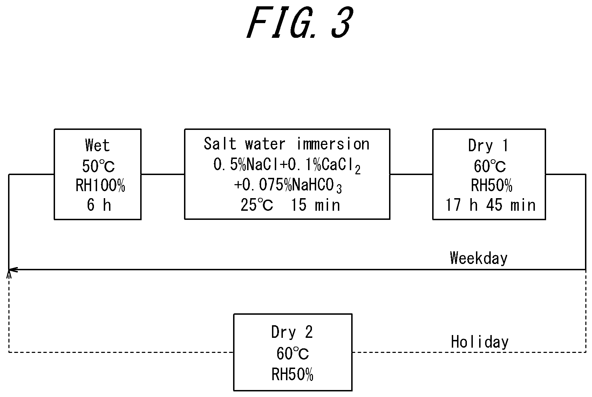

A cyclic corrosion test was carried out on the test piece under the cycle conditions illustrated in FIG. 3. After 120 cycles, the welded portion of each sample was disassembled to remove corrosion products inside the steel sheet overlap area, and a depth of corrosion holes was measured using a point micrometer. Evaluations were made according to the following criteria and results are listed in Table 1. Examples that had a smaller maximum corrosion depth than Comparative Example No. 43, which had the greatest coating weight, were evaluated as having particularly superior corrosion resistance and are indicated by "⊚". Examples that had a maximum corrosion depth that was at least the maximum corrosion depth of No. 43 but less than 80 % of an average maximum corrosion depth of No. 41 and No. 42 were evaluated as having excellent corrosion resistance and are indicated by "O". Examples that had a maximum corrosion depth that was at least 80 % of the average maximum corrosion depth of No. 41 and No. 42 were evaluated as having approximately the same corrosion resistance as No. 41 and No. 42 and are indicated by "-".

### <Sliding properties>

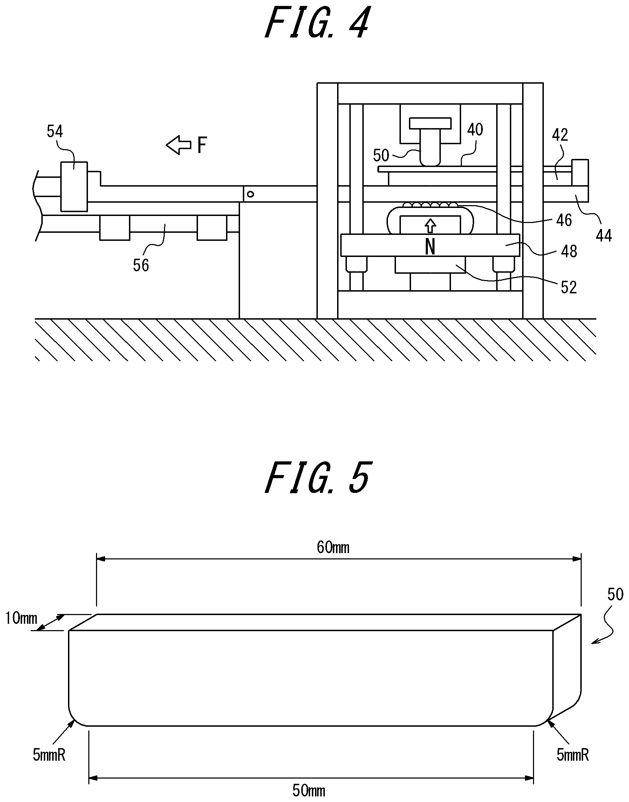

The frictional coefficient of each test material was measured for evaluation of sliding properties as described below. FIG. 4 illustrates a schematic front view of a frictional coefficient measuring apparatus. As illustrated in FIG. 4, a sample 40 for frictional coefficient measurement was fixed to a sample table 42, and the sample table 42 was fixed to a top of a slide table 44 that allowed horizontal movement. A slide table support 48 including rolls 46 and movable in the vertical direction was provided under the slide table 44 such that the rolls 46 were in contact with the lower surface of the slide table 44. A first load cell 52 was attached to the slide table support 48 for measuring a pressing load N on the sample 40 for frictional coefficient measurement via a bead 50 by pushing upward. A second load cell 54 was mounted to one end of the slide table 44 for measuring sliding resistance force F experienced when the slide table 44 was moved in the horizontal direction while the pressing load described above was applied. The test was conducted with Preton^{®} R352L (Preton is a registered trademark in Japan, other countries, or both), a cleaning oil for presses produced by Sugimura Chemical Industrial Co., Ltd., as a lubricant applied to a surface of the sample 40.

FIG. 5 is a schematic diagram illustrating shape and dimensions of the bead used in the frictional coefficient measurement. The sample 40 of FIG. 4 was slid in a state where the lower surface of the bead 50 was pushed against the surface of the sample 40. Using this bead, the test was conducted under the following conditions: pressing load N: 400 kgf, and sample withdrawal rate (horizontal movement speed of slide table 44): 20 cm/min. The frictional coefficient µ between the test material and the bead was calculated using the expression: µ = F/N. Table 1 lists the frictional coefficient measurement for each example. The smaller the frictional coefficient, the better the evaluation result for sliding properties.

### <Spot weldability>

To evaluate the spot weldability of each example, spot welding was carried out according to the welding conditions listed below, and a number of welding spots in continuous spot welding was investigated. The welding current values in the continuous spot weldability study were the average of current I1 (kA) and welding current I2 (kA) values that yielded a nugget diameter indicated by 4√t where the sheet thickness was t (mm). The number of welding spots that were made until the nugget diameter became smaller than 4√t was counted as the number of welds in continuous spot welding. The evaluation was based on the following criteria and results are listed in Table 1. When the number of welding spots in continuous spot welding was the same or greater than the number for No. 41, this was evaluated as particularly superior spot weldability and is indicated by "⊚". When the number of welding spots in continuous spot welding was less than the number for No. 41 but the same or greater than an average of the numbers for No. 41 and No. 42, this was evaluated as excellent spot weldability and is indicated by "0". When the number of welding spots in continuous spot welding was less than the average of the numbers for No. 41 and No. 42 but the same or greater than the number for No. 42, this was evaluated as relatively good spot weldability and is indicated by "△". When the number of welding spots in continuous spot welding was less than the number for No. 42, this was evaluated as poor spot weldability and is indicated by " ×".

### (Welding conditions)

| | |
|---|---|
| Electrode | CF type |
| Tip diameter | 4.5 mm |
| Tip angle | 120° |
| Outer diameter | 13 mm |
| Material | Cu-Cr |
| Current passage time | 10 cycles |
| Electrode force | 170 kgf |
| Pressure conditions | |

| | |
|---|---|
| Before current passage | 30 cycles |
| After current passage | 7 cycles |
| No up-down slope | |

The results in Table 1 indicate that the Examples have superior corrosion resistance, sliding properties and spot weldability compared to the typical galvannealed steel sheet or hot-dip galvanized steel sheets used as Comparative Examples.

### [Table 1]

**Table 1**

| No. | Chemical composition of coated layer | | | | Cooling conditions | | | | Zn single-phase microstructure | Eutectic microstructure | Eutectic microstructure area fraction A (%) | Oxide layer average thickness B (nm) | B/A | Corrosion resistance | Frictional coefficient | Spot weldability | Classification |
|---|---|---|---|---|---|---|---|---|---|---|---|---|---|---|---|---|---|
| | | | | | 400 °C to 380 °C | | 160 °C to 140 °C | | | | | | | | | | |
| | Al (mass%) | Mg (mass%) | Other (mass%) | Residual microstructure | Hold time (s) | Atmosphere | Hold time (s) | Atmosphere | | | | | | | | | |
| 1 | 3.0 | 3.0 | - | Zn | 15 | N₂-10%H₂ | 30 | N₂-40%O₂ | ○ | ○ | 42 | 23 | 0.55 | ⊚ | 0.22 | ○ | Example |
| 2 | 3.0 | 3.0 | - | Zn | 1 | N₂-10%H₂ | 30 | N₂-40%O₂ | ○ | ○ | 75 | 24 | 0.32 | ⊚ | 0.23 | × | Comparative Example |
| 3 | 3.0 | 3.0 | - | Zn | 15 | air | 30 | N₂-40%O₂ | ○ | ○ | 41 | **51** | 1.24 | ⊚ | 0.20 | × | Comparative Example |
| 4 | 3.0 | 3.0 | - | Zn | 15 | N₂-1%O₂ | 30 | N₂-40%O₂ | ○ | ○ | 43 | 46 | 1.07 | ⊚ | 0.21 | △ | Example |
| 5 | 3.0 | 3.0 | - | Zn | 15 | N₂ | 30 | N₂-40%O₂ | ○ | ○ | 42 | 41 | 0.98 | ⊚ | 0.22 | △ | Example |
| 6 | 3.0 | 3.0 | - | Zn | 15 | N₂-1%H₂ | 30 | N₂-40%O₂ | ○ | ○ | 44 | 37 | 0.84 | ⊚ | 0.21 | ○ | Example |
| 7 | 3.0 | 3.0 | - | Zn | 15 | N₂-10%H₂ | 3 | N₂-40%O₂ | ○ | ○ | 42 | **6** | 0.14 | ⊚ | 0.33 | ○ | Comparative Example |
| 8 | 3.0 | 3.0 | - | Zn | 15 | N₂-10%H₂ | 30 | air | ○ | ○ | 43 | 11 | 0.26 | ⊚ | 0.29 | ○ | Example |
| 9 | 3.0 | 3.0 | - | Zn | 1 | N₂-10%H₂ | 3 | N₂-40%O₂ | ○ | ○ | **73** | **8** | 0.11 | ⊚ | 0.31 | × | Comparative Example |
| 10 | 3.0 | 3.0 | - | Zn | 8 | N₂-10%H₂ | 30 | N₂-40%O₂ | ○ | ○ | **65** | 21 | 0.32 | ⊚ | 0.26 | × | Comparative Example |
| 11 | 3.0 | 3.0 | - | Zn | 12 | N₂-10%H₂ | 30 | N₂-40%O₂ | ○ | ○ | 54 | 21 | 0.39 | ⊚ | 0.25 | △ | Example |
| 12 | 3.0 | 3.0 | - | Zn | 13 | N₂-10%H₂ | 30 | N₂-40%O₂ | ○ | ○ | 55 | 21 | 0.38 | ⊚ | 0.25 | △ | Example |
| 13 | 3.0 | 3.0 | - | Zn | 20 | N₂-10%H₂ | 30 | N₂-40%O₂ | ○ | ○ | 32 | 24 | 0.75 | ⊚ | 0.23 | ○ | Example |
| 14 | 3.0 | 3.0 | - | Zn | 25 | N₂-10%H₂ | 30 | N₂-40%O₂ | ○ | ○ | 26 | 24 | 0.92 | ⊚ | 0.24 | ○ | Example |
| 15 | 3.0 | 3.0 | - | Zn | 30 | N₂-10%H₂ | 30 | N₂-40%O₂ | ○ | ○ | 23 | 25 | 1.09 | ⊚ | 0.23 | ○ | Example |
| 16 | 3.0 | 3.0 | - | Zn | 15 | N₂-10%H₂ | 17 | N₂-40%O₂ | ○ | ○ | 40 | **8** | 0.20 | ⊚ | 0.32 | ○ | Comparative Example |
| 17 | 3.0 | 3.0 | - | Zn | 15 | N₂-10%H₂ | 25 | N₂-40%O₂ | ○ | ○ | 43 | 15 | 0.35 | ⊚ | 0.28 | ○ | Example |
| 18 | 3.0 | 3.0 | - | Zn | 15 | N₂-10%H₂ | 35 | N₂-40%O₂ | ○ | ○ | 46 | 28 | 0.61 | ⊚ | 0.22 | ○ | Example |
| 19 | 3.0 | 3.0 | - | Zn | 15 | N₂-10%H₂ | 40 | N₂-40%O₂ | ○ | ○ | 40 | 31 | 0.78 | ⊚ | 0.21 | ○ | Example |
| 20 | **0.4** | 3.0 | - | Zn | 15 | N₂-10%H₂ | 30 | N₂-40%O₂ | ○ | ○ | 12 | 18 | 1.50 | - | 0.27 | ○ | Comparative Example |
| 21 | 0.7 | 3.0 | - | Zn | 15 | N₂-10%H₂ | 30 | N₂-40%O₂ | ○ | ○ | 23 | 20 | 0.87 | ○ | 0.25 | ○ | Example |
| 22 | 1.2 | 3.0 | - | Zn | 15 | N₂-10%H₂ | 30 | N₂-40%O₂ | ○ | ○ | 33 | 24 | 0.73 | ⊚ | 0.23 | ○ | Example |
| 23 | 5.0 | 3.0 | - | Zn | 15 | N₂-10%H₂ | 30 | N₂-40%O₂ | ○ | ○ | 49 | 27 | 0.55 | ⊚ | 0.22 | ○ | Example |
| 24 | 9.0 | 3.0 | - | Zn | 15 | N₂-10%H₂ | 30 | N₂-40%O₂ | ○ | ○ | 53 | 32 | 0.60 | ⊚ | 0.21 | △ | Example |
| 25 | **12.0** | 3.0 | - | Zn | 15 | N₂-10%H₂ | 30 | N₂-40%O₂ | ○ | ○ | **61** | 33 | 0.54 | ○ | 0.21 | × | Comparative Example |
| 26 | 3.0 | **0.3** | - | Zn | 15 | N₂-10%H₂ | 30 | N₂-40%O₂ | ○ | ○ | 15 | 17 | 1.13 | - | 0.27 | ○ | Comparative Example |
| 27 | 3.0 | 0.6 | - | Zn | 15 | N₂-10%H₂ | 30 | N₂-40%O₂ | ○ | ○ | 22 | 21 | 0.95 | ○ | 0.25 | ○ | Example |
| 28 | 3.0 | 1.2 | - | Zn | 15 | N₂-10%H₂ | 30 | N₂-40%O₂ | ○ | ○ | 35 | 23 | 0.66 | ⊚ | 0.24 | ○ | Example |
| 29 | 3.0 | 6.0 | - | Zn | 15 | N₂-10%H₂ | 30 | N₂-40%O₂ | ○ | ○ | 49 | 29 | 0.59 | ⊚ | 0.23 | ○ | Example |
| 30 | 3.0 | 9.0 | - | Zn | 15 | N₂-10%H₂ | 30 | N₂-40%O₂ | ○ | ○ | 55 | 31 | 0.56 | ⊚ | 0.23 | △ | Example |
| 31 | 3.0 | **11.0** | - | Zn | 15 | N₂-10%H₂ | 30 | N₂-40%O₂ | ○ | ○ | **63** | 32 | 0.51 | ⊚ | 0.22 | × | Comparative Example |
| 32 | 3.0 | 3.0 | Si:0.5 | Zn | 15 | N₂-10%H₂ | 30 | N₂-40%O₂ | ○ | ○ | 38 | 22 | 0.58 | ⊚ | 0.26 | ○ | Example |
| 33 | 3.0 | 3.0 | Fe:0.5 | Zn | 15 | N₂-10%H₂ | 30 | N₂-40%O₂ | ○ | ○ | 43 | 25 | 0.58 | ⊚ | 0.24 | ○ | Example |
| 34 | 3.0 | 3.0 | Fe:1.0 | Zn | 15 | N₂-10%H₂ | 30 | N₂-40%O₂ | ○ | ○ | 39 | 23 | 0.59 | ⊚ | 0.25 | ○ | Example |
| 35 | 3.0 | 3.0 | Si:0.5 Fe:0.5 | Zn | 15 | N₂-10%H₂ | 30 | N₂-40%O₂ | ○ | ○ | 44 | 21 | 0.48 | ⊚ | 0.26 | ○ | Example |
| 36 | 3.0 | 3.0 | Ni:0.5 | Zn | 15 | N₂-10%H₂ | 30 | N₂-40%O₂ | ○ | ○ | 41 | 22 | 0.54 | ⊚ | 0.25 | ○ | Example |
| 37 | 3.0 | 3.0 | Cr:0.5 | Zn | 15 | N₂-10%H₂ | 30 | N₂-40%O₂ | ○ | ○ | 43 | 22 | 0.51 | ⊚ | 0.25 | ○ | Example |
| 38 | 3.0 | 3.0 | Sr:0.5 | Zn | 15 | N₂-10%H₂ | 30 | N₂-40%O₂ | ○ | ○ | 37 | 24 | 0.65 | ⊚ | 0.26 | ○ | Example |
| 39 | 3.0 | 3.0 | Sn:0.5 | Zn | 15 | N₂-10%H₂ | 30 | N₂-40%O₂ | ○ | ○ | 40 | 23 | 0.58 | ⊚ | 0.24 | ○ | Example |
| 40 | 3.0 | 3.0 | REM:0.5 | Zn | 15 | N₂-10%H₂ | 30 | N₂-40%O₂ | ○ | ○ | 44 | 22 | 0.50 | ⊚ | 0.25 | ○ | Example |
| 41 | - | | | | | | | | | | | **8** | - | - | 0.25 | ⊚ | Comparative Example |
| 42 | - | | | | | | | | | | | **4** | - | - | 0.32 | △ | Comparative Example |
| 43 | - | | | | | | | | | | | **4** | - | ○ | 0.33 | × | Comparative Example |

### [Table 2]

**Table 2**

| No. | Type | Coating weight | Chemical composition of coated layer | | | Oxide layer average thickness | Frictional coefficient |
|---|---|---|---|---|---|---|---|
| | | | Fe | Al | Residual micro- | | |
| | | (g/m²) | (mass%) | (mass%) | structure | (nm) | |
| 41 | Galvannealed steel sheet (GA) | 45 | 9.8 | 0.2 | Zn | 8 | 0.25 |
| 42 | Hot-dip galvanized steel sheet (GI) | 48 | 0.1 | 0.2 | Zn | 4 | 0.32 |
| 43 | Hot-dip galvanized steel sheet (GI) | 65 | 0.1 | 0.2 | Zn | 4 | 0.33 |

### INDUSTRIAL APPLICABILITY

The Zn-Al-Mg coated steel sheet according to the present disclosure has both excellent sliding properties and spot weldability while also securing excellent corrosion resistance, and is therefore applicable to various applications such as steel sheets for automobiles.

### REFERENCE SIGNS LIST

- 10: Zn single-phase microstructure
- 12: eutectic microstructure
- 20: spot welded portion
- 40: sample for frictional coefficient measurement
- 42: sample table
- 44: slide table
- 46: rolls
- 48: slide table support
- 50: bead
- 52: first load cell
- 54: second load cell
- 56: rail
- N: pressing load
- F: sliding resistance force

## Claims

1. A Zn-Al-Mg coated steel sheet comprising: a steel sheet; a coated layer formed on at least one side of the steel sheet; and an oxide layer formed on a surface of the coated layer, wherein
the coated layer has a chemical composition containing, in mass%, Al: 0.5 % or more and 10.0 % or less, and Mg: 0.5 % or more and 10.0 % or less, with the balance being Zn and inevitable impurity,
the surface of the coated layer has a Zn single-phase microstructure and a eutectic microstructure,
the eutectic microstructure contains a Zn-Mg intermetallic compound phase and also one or more phases selected from a Zn phase, an Al phase, and an Al-Mg intermetallic compound phase,
an area fraction A of the eutectic microstructure on the surface of the coated layer is less than 60 %, and
an average thickness B of the oxide layer on the surface of the coated layer is 10 nm or more and 50 nm or less.

2. The Zn-Al-Mg coated steel sheet according to claim 1, wherein the area fraction A, in %, of the eutectic microstructure and the average thickness B, in nm, of the oxide layer satisfy B/A ≥ 0.40.

3. The Zn-Al-Mg coated steel sheet according to claim 1 or 2, wherein the chemical composition of the coated layer further contains one or more selected from the group consisting of Si, Fe, Pb, Ti, Ni, Cu, Co, Mn, Cr, Mo, V, Sr, B, Bi, Cd, Sn, and REM, in a total amount of 1 mass% or less.
